# EUROPÄISCHE PATENTANMELDUNG

(11) **EP 2 224 214 A2**
(43) Veröffentlichungstag der Anmeldung: **01.09.2010**
(21) Anmeldenummer: 10154352.8
(22) Anmeldetag: 23.02.2010
(51) Int. Cl.: G01C 21/36

(54) **Verfahren zum Betrieb eines Navigationssystems mit Paralleleingabemodus**

(30) Priorität: 27.02.2009 DE 102009010818; 17.02.2010 DE 102010008368
(71) Anmelder: Navigon AG, 20251 Hamburg (DE)
(72) Erfinder: Fritsche, Jan-Georg, 97078, Würzburg (DE)
(74) Vertreter: von den Steinen, Axel

(57) **Zusammenfassung**

Die Erfindung betrifft ein Verfahren zum Betrieb eines Navigationssystems umfassend:
- zumindest eine manuelle Eingabeeinrichtung, an der Bedienerbefehle manuell eingegeben werden können,
- zumindest eine optische Ausgabeeinrichtung, mit der graphische Elemente dargestellt werden können,
- eine Sprachsteuerungseinrichtung zur akustischen Eingabe von Bedienerbefehlen, wobei die akustischen Bedienerbefehle von einer akustischen Aufnahmeeinrichtung aufgenommen und von einem Spracherkennungsmodul identifiziert werden,
- zumindest eine akustische Ausgabeeinrichtung zur Ausgabe von akustischen, insbesondere gesprochenen, Inhalten,

wobei für die manuelle Eingabeeinrichtung und die Sprachsteuerungseinrichtung ein Paralleleingabemodus aktiviert wird, wobei im Paralleleingabemodus sowohl manuelle Eingaben von Bedienerbefehlen an der manuellen Eingabeeinrichtung als auch akustische Eingaben von Bcdicnerbefehlen an der Sprachsteuerungseinrichtung entgegengenommen und weiterverarbeitet werden.

## Beschreibung

Die Erfindung betrifft ein Verfahren zum Betrieb eines Navigationssystems nach dem Oberbegriff des Anspruchs 1.

Bekannte Navigationssysteme sind mit einer manuellen Eingabeeinrichtung und/oder einer Sprachsteuerungseinrichtung zur Eingabe von Bedienerbefehlen, wie beispielesweise der Eingabe einer Zieladresse, ausgestattet. Des Weiteren verfügen bekannte Navigationssysteme über akustische und graphische Ausgabeeinrichtungen zur Ausgabe von graphischen Elementen bzw. akustischen Inhalten. Dies bedeutet mit anderen Worten, dass bei diesen Navigationssystemen Bedienerbefehle entweder mittels Tastatur oder Touchscreen manuell oder mittels einer Aufnahmeeinrichtung und einem Spracherkennungsmodul akustisch eingegeben werden können. Über eine optische und/oder graphische Ausgabeeinrichtung kann eine Vielzahl von Informationen, wie beispielsweise die Entfernung zum Zielpunkt der Route, die voraussichtliche Ankunftszeit am Zielpunkt, Manöveranweisungen zum Verfolgen der Route und die Entfernung bis zum nächsten Manöver, ausgegeben werden.

Bei bekannten Navigationssystemen ist es üblich, dass die sprachgesteuerte Eingabe von Bedienerbefehlen eine Aktivierung der Sprachsteuerungseinrichtung durch den Bediener vorsieht. Die Aktivierung der Sprachsteuerungseinrichtung erfolgt dabei beispielsweise über die Betätigung eines Schalters am Navigationssystem oder eines Bedienelements eines Touchscreens. Erst nach der Aktivierung der Sprachsteuerungseinrichtung können Bedienerbefehle, wie beispielsweise die Eingabe einer Zieladresse, mittels Sprachsteuerung erfolgen.

Nachteilig an diesem bekannten Verfahren zur Sprachsteuerung ist es, dass die Sprachsteuerungseinrichtung vor der akustischen Eingabe von Bedienerbefehlen zunächst vom Bediener aktiviert werden muss. Dadurch wird die Aufmerksamkeit des Bedieners gebunden, was insbesondere im Straßenverkehr zu Gefahrensituationen führen kann. Eine manuelle Aktivierung der Sprachsteuerungseinrichtung ist auch deshalb besonders nachteilig, weil sie im Widerspruch zu den beabsichtigten Vorzügen einer Sprachsteuerung steht. Diese Vorzüge einer Sprachsteuerung liegen insbesondere darin, dass dem Bediener die Eingabe von Bedienerbefehlen ermöglicht wird, ohne dass ein visuelles Identifizieren und manuelles Betätigen eines Bedienelements erforderlich sind. Handelt es sich bei dem auszuführenden Bedienerbefehl um eine einfache Bestätigung bzw. Entscheidung, wie beispielsweise die Bestätigung bzw. die Entscheidung, dass eine Verkehrsstörung umfahren werden soll, so sind aufgrund der Aktivierung der Sprachsteuerung ebenso viele manuelle Eingaben notwendig, wie wenn der Bedienerbefehl direkt manuell eingegeben wird.

Ausgehend von diesem Stand der Technik ist es deshalb Aufgabe der vorliegenden Erfindung, ein neues Verfahren zum Betrieb eines Navigationssystems vorzuschlagen, bei dem die sprachgesteuerte Eingabe von Bedienerbefehlen ohne vorherige Aktivierung der Sprachsteuerungseinrichtung erfolgen kann.

Die Aufgabe wird durch ein Verfahren nach der Lehre des Anspruchs 1 gelöst.

Vorteilhafte Ausführungsformen der Erfindung sind Gegenstand der Unteransprüche.

Das erfindungsgemäße Verfahren beruht auf dem Grundgedanken, dass das Navigationssystem um einen Paralleleingabemodus für die manuelle Eingabeeinrichtung und die Sprachsteuerungseinrichtung erweitert wird. In diesem Paralleleingabemodus können sowohl manuelle Eingaben von Bedienerbefehlen an der manuellen Eingabeeinrichtung als auch akustische Eingaben von Bedienerbefehlen an der Sprachsteuerungseinrichtung entgegengenommen und weiterverarbeitet werden. Dadurch ergibt sich im Paralleleingabemodus für den Benutzer die Möglichkeit die Art der Eingabe frei zu wählen. Befindet sich der Benutzer in einer Situation, wie beispielsweise auf einem Parkplatz, in der die manuelle Eingabe von Bedienerbefehlen gefahrlos möglich ist, so kann im Paralleleingabemodus eine manuelle Eingabe von Bedienerbefehlen an der manuellen Eingabeeinrichtung stattfinden. Ist jedoch eine manuelle Eingabe, wie beispielsweise im dichten innerstädtischen Verkehr, nicht ohne Weiteres möglich, so kann im Paralleleingabemodus eine akustische Eingabe von Bedienerbefehlen an der Sprachsteuerungseinrichtung erfolgen.

In welchen Situationen der Paralleleingabemodus aktiviert wird, ist grundsätzlich beliebig. Nach einer ersten bevorzugten Verfahrensvariante wird der Paralleleingabemodus aktiviert, wenn ein Navigationsziel eingegeben wird und/oder eine Verkehrsmitteilung bearbeitet wird und/oder ein routenspezifisches Zwischenziel ausgewählt wird und/oder eine Karte angezeigt wird. In Abhängigkeit von den Verkehrssituationen, in denen die genannten Situationen auftreten, kann jeweils sowohl eine manuelle Eingabe als auch eine akustische Eingabe von Bedienerbefehlen vorteilhaft sein.

Im Hinblick auf die Benutzung des erfindungsgemäßen Verfahrens beim Betrieb von Navigationssystemen ist es weiterhin besonders vorteilhaft, wenn die Aktivierung des Paralleleingabemodus durch eine optische und/oder akustische Ausgabe signalisiert wird. Dabei kann es sich beispielsweise um ein graphisches Symbol handeln, welches über die optische Ausgabeeinrichtung ausgegeben wird. Alternativ bzw. additiv kann es sich auch um ein akustisches, insbesondere gesprochenes, Signal handeln. Hierbei wäre beispielsweise eine Ausgabe der Form: "Paralleleingabemodus aktiv", über die akustische Ausgabeeinrichtung besonders vorteilhaft. Durch das Signal für die Aktivierung des Paralleleingabemodus kann der Benutzer die Vorteile des Paralleleingabemodus besonders effektiv ausnutzen.

Gemäß einer bevorzugten Verfahrensvariante verfügt das Navigationssystem über mehrere Interaktionsmodi, wobei zwischen den unterschiedlichen Interaktionsmodi umgeschaltet werden kann. Die unterschiedlichen Interaktionsmodi sind dadurch charakterisiert, dass für die Interaktion zwischen Benutzer und Gerät jeweils unterschiedliche Benutzerführungsregeln vorgesehen sind. D.h. abhängig vom jeweils aktivierten Interaktionsmodus akzeptiert das Gerät unterschiedliche Eingabeformen, beispielsweise als Sprachbefehle oder Tastatureingaben. Auch die Ausgaben des Geräts an den Benutzer können mit dem Interaktionsmodus variieren, so dass beispielsweise entweder Sprachausgaben gemacht werden oder bestimmte Inhalte am Bildschirm angezeigt werden. Auch können die Workflows zur Verarbeitung bestimmter Eingabekombinationen abhängig vom aktivierten Interaktionsmodus variieren.

In einer ersten Ausführungsform verfügt das Navigationssystem über einen akustischen Interaktionsmodus, bei dem Eingaben akustisch eingegeben und Ausgaben akustisch ausgegeben werden. Diese Verfahrensvariante kann auch so ausgeprägt sein, dass neben dem akustischen Interaktionsmodus ein manueller Interaktionsmodus, bei dem Eingaben manuell eingegeben und Ausgaben optisch ausgegeben werden, vorgesehen ist.

Zusätzlich kann, neben dem akustischen und dem manuellen Interaktionsmodus, ein gemischter Interaktionsmodus vorgesehen sein, bei dem Eingaben akustisch und manuell eingegeben werden und Ausgaben akustisch und optisch ausgegeben werden können.

Gemäß einer bevorzugten Variante wird nach der Detektion einer manuellen Eingabe im Paralleleingabemodus ausschließlich der manuelle Interaktionsmodus aktiviert. Dem liegt die Grundüberlegung zugrunde, dass nach einer manuellen Eingabe des Benutzers die folgenden Eingaben mit relativ hoher Wahrscheinlichkeit ebenfalls manuell eingegeben werden. Durch das Aktivieren des manuellen Interaktionsmodus kann Rechenleistung und Speicherkapazität des Navigationssystems freigegeben werden, die durch den Paralleleingabemodus beansprucht werden. Dadurch kann die Leistungsfähigkeit des Navigationssystems gesteigert werden.

Gemäß einer weiteren Variante wird nach der Detektion einer akustischen Eingabe im Paralleleingabemodus ausschließlich der akustische Interaktionsmodus aktiviert. Erfolgt im Paralleleingabemodus eine akustische Eingabe, dann wird der Benutzer die folgenden Benutzerbefehle mit hoher Wahrscheinlichkeit ebenfalls akustisch eingeben und akustische Ausgaben bevorzugen. Denn die akustische Eingabe von Bedienerbefehlen lässt vermuten, dass der Benutzer sich in einer Situation befindet, in der manuelle Eingaben und optische Ausgaben nachteilhaft sind.

Um die Flexibilität für den Benutzer zu erhöhen, ist es besonders vorteilhaft, wenn nach der Detektion einer akustischen oder manuellen Eingabe im Paralleleingabemodus ausschließlich der gemischte Interaktionsmodus aktiviert wird. Denn in vielen Situationen können manuelle und akustische Eingaben bzw. graphische und akustische Ausgaben zur Bedienung des Navigationssystems vorteilhaft sein.

In welchen Interaktionsmodus nach der Detektion einer akustischen oder manuellen Eingabe im Paralleleingabemodus umgeschaltet wird, ist grundsätzlich beliebig, da für das Umschalten in einen Interaktionsmodus eine Vielzahl von unterschiedlichen Einflüssen von Interesse sein kann. Von besonders großer Bedeutung für den Benutzerkomfort ist es, dass nach der Detektion einer akustischen oder manuellen Eingabe im Paralleleingabemodus der aktuelle Interaktionsmodus überprüft und in Abhängigkeit von der Art der Eingabe umgeschaltet wird. Denn bei einem dauerhaften Betrieb eines Navigationssystems im Paralleleingabemodus kann die Leistungsfähigkeit des Navigationssystems beeinträchtigt werden.

Weiterhin ist es beim Betrieb des erfindungsgemäßen Verfahrens auf einem Navigationssystem besonders vorteilhaft, wenn unabhängig von der aktuellen Benutzeraktion Ausgaben, insbesondere die Ausgabe von Manöveranweisungen, in einem geänderten Interaktionsmodus erfolgen. Denn die Ausgabe von Manöveranweisungen ist beispielsweise im gemischten Interaktionsmodus besonders effektiv, da beispielsweise die Kombination aus einer graphischen Manöveransicht und einer gesprochenen Manöveranweisung ausgegeben werden können, auch wenn durch die aktuelle Benutzeraktion beispielsweise der akustische Interaktionsmodus bevorzugt wird. Daher kann für derartige Ausgaben ein Umschalten in einen geänderten Interaktionsmodus bevorzugt werden.

Um die Eingabe zu erleichtern ist es besonders vorteilhaft, wenn der aktuell aktivierte Interaktionsmodus detektiert wird und der Eingabeworkflow entsprechend dem aktivierten Interaktionsmodus aus unterschiedlichen Eingabeworkflows ausgewählt wird. Der Eingabeworkflow für einen bestimmten Interaktionsmodus wird dabei für die Benutzerführung durch die Eingabemenüs verwendet. Denn es ist beispielsweise im akustischen Interaktionsmodus besonders vorteilhaft, akustische Bedienerbefehle durch die Abfrage einer Bestätigung auf Richtigkeit bzw. Vollständigkeit zu überprüfen. Die Abfrage einer Bestätigung ist jedoch nach einer manuellen Eingabe im manuellen Interaktionsmodus nur in wenigen Ausnahmen sinnvoll.

In welcher Weise die Abarbeitung von Sprachkommandos erfolgt, ist grundsätzlich beliebig. Nach einer bevorzugten Verfahrensvariante sind für die akustische Eingabe von Bedienerbefehlen im akustischen und/oder gemischten Interaktionsmodus zumindest zwei alternativ mögliche Sprachkommandos gespeichert. Die Eingabe eines der gespeicherten Sprachkommandos löst dabei die Abarbeitung des zugeordneten Bedienerbefehls aus. Beispielsweise können zum Vergrößern der Auflösung einer Kartenansicht auf der optischen Ausgabeeinrichtung die Sprachkommandos "heranzoomen" und "Karte vergrößern" gespeichert sein.

Die Erkennung der Sprachkommandos im Spracherkennungsmodul kann sowohl so verwendet werden, dass die eingesprochene Phrase genau mit einem der hinterlegten Kommandos übereinstimmen muss oder die eingesprochene Phrase in ihre Einzelteile zerlegt wird und die Einzelteile einzeln gegen den vorhandenen Kommandowortschatz geprüft werden. So ist es möglich, eine sogenannte Schlüsselworterkennung' durchzuführen. Der Benutzer ist so wesentlich freier in dem was er sprechen kann. Das Kommando wird so auch dann erkannt, wenn es zwischen anderen Wörtern gesprochen wird oder aber sich auch am Anfang oder Ende der gesprochenen Phrase befindet. So wird z.B. das Sprachkommando 'lauter' auch dann erkannt, wenn der Benutzer 'könnten die Anweisungen etwas lauter sein' spricht. Auch das Attributieren eines Sprachkommandos ist so möglich. So kann 'ein bisschen lauter' oder ,viel lauter' Einfluss darauf haben, um welches Delta die Lautstärke geändert wird.

Die Identifizierung von einem der Sprachkommandos durch das Spracherkennungsmodul im akustischen und/oder gemischten Interaktionsmodus führt zur Abarbeitung des gewünschten Bedienerbefehls. Durch die Zuordnung mehrerer Sprachkommandos zu einem Bedienerbefehl wird die sprachgesteuerte Bedienung des Navigationssystems erheblich erleichtert.

In welcher Weise die akustischen Eingaben aufgenommen bzw. die akustischen Ausgaben ausgegeben werden, ist grundsätzlich beliebig. In einer bevorzugten Ausführungsform des erfindungsgemäßen Verfahrens wird zum Betrieb des Navigationssystems in einem Fahrzeug die akustische Ausgabe- und/oder Aufnahmeeinrichtung des im Fahrzeug befindlichen Audiosystems verwendet. Mit der Anbindung an das Audiosystem des Fahrzeugs werden einerseits zusätzliche Komponenten eingespart und andererseits eine Koppelung an die Lautstärkenregelung des Audiosystems ermöglicht. Dies führt dazu, dass die akustischen Ein- und/oder Ausgaben nicht von den Signalen des Audiosystems des Fahrzeugs überlagert und/oder gestört werden.

Gemäß einer bevorzugten Variante wird als Aufnahmevorrichtung der akustischen Bedienerbefehle ein unidirektionales Stereomikrophon verwendet. Dem liegt die Grundüberlegung zugrunde, dass die akustischen Signale, die von der Aufnahmeeinrichtung aufgenommen werden, möglichst frei von Störsignalen und möglichst nur aus dem Kopfbereich des Bedieners aufgenommen werden. Durch ein unidirektionales Stereomikrophon können Umgebungsgeräusche effektiv unterdrückt werden.

Verschiedene Aspekte des erfindungsgemäßen Verfahrens sind in den Zeichnungen schematisiert dargestellt und werden nachfolgend beispielhaft erläutert.

Es zeigen:
- Fig. 1:: eine Anzeige auf der optischen Anzeigeeinrichtung eines Navigationssystems im Paralleleingabemodus;
- Fig. 2:: die Anzeige verschiedener Routenoptionen auf der Anzeigeeinrichtung eines Navigationssystems im manuellen Interaktionsmodus;
- Fig. 3:: die Anzeige verschiedener Routenoptionen auf der Anzeigeeinrichtung eines Navigationssystems im akustischen oder gemischten Interaktionsmodus.

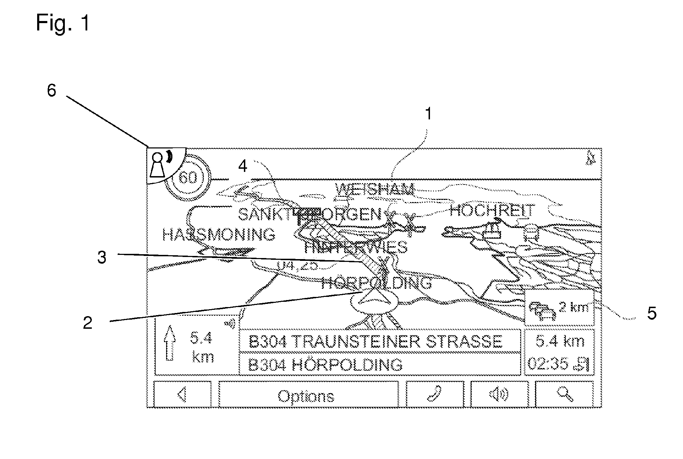

Fig. 1 zeigt eine Karte 01, auf der ein Symbol 02 für die aktuelle Fahrzeugposition sowie die aktuelle Route 03 enthalten sind. Wird auf der aktuellen Route 03 eine Verkehrsstörung 04 festgestellt, so wird der Benutzer, unabhängig vom Interaktionsmodus, durch das graphische Bedienelement 05 auf der Anzeigeeinrichtung und eine akustische Ausgabe auf die Verkehrsstörung 04 aufmerksam gemacht. Die akustische Ausgabe kann beispielsweise lauten: "Verkehrsereignisse betreffen Ihre Route. Eine Umfahrung wird empfohlen. Möchten Sie die Alternativroute jetzt sehen?"

Das Feststellen einer Verkehrsstörung auf der aktuellen Route 03 führt zur Aktivierung des Paralleleingabemodus. Auf der Anzeigeeinrichtung wird ein Symbol 06 angezeigt, welches den Benutzer darauf hinweist, dass eine sprachgesteuerte Eingabe von Bedienerbefehlen möglich ist. Des Weiteren kann eine akustische Ausgabe die Aktivierung des Paralleleingabemodus signalisieren. Die akustische Meldung kann dabei lauten: "Paralleleingabemodus aktiviert."

Der Benutzer ist somit über die vor ihm liegende Verkehrsstörung und die Aktivierung des Paralleleingabemodus informiert. Je nachdem, welche Eingabeart der Benutzer bevorzugt oder welche Eingabeart die aktuelle Verkehrssituation zulässt, kann der Benutzer entweder über das Bedienelement 05 eine manuelle Eingabe vornehmen oder eine akustische Eingabe, wie beispielsweise "Alternative Route zeigen.", ausführen.

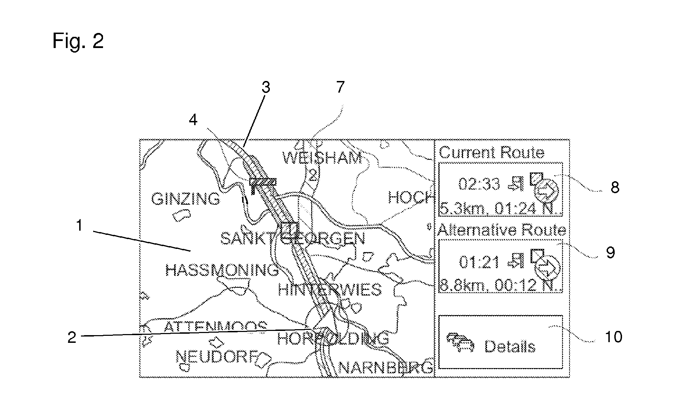

Fig. 2 zeigt die Anzeige einer Anzeigeeinrichtung, die vom Navigationssystem aufgebaut und angezeigt wird, wenn der Bediener sich in der in Fig. 1 beschriebenen Situation für eine manuelle Eingabe mittels des Bedienelements 05 entschieden hat. Die Karte 01 enthält neben dem Symbol 02 für die aktuelle Fahrzeugposition und der aktuellen Route 03 mit der Verkehrsstörung 04 auch eine alternative Route 07 zur Umfahrung der Verkehrsstörung 04. Außerdem werden verschiedene Informationen zur aktuellen Route 03 auf dem Bedienelement 08 und verschiedene Informationen zur alternativen Route 07 auf dem Bedienelement 09 dargestellt. Zudem enthält die Anzeige ein Bedienelement 10, mit dem der Benutzer Details zur aktuellen Verkehrslage abrufen kann.

Durch die manuelle Eingabe in der in Fig. 1 dargestellten Situation ist in Fig. 2 ein Wechsel in den manuellen Interaktionsmodus erfolgt. Daher können in Fig. 2 Bedienerbefehle nur manuell über die Bedienfelder 08, 09 und 10 eingegeben werden.

Wird durch den Bediener das Bedienelement 09 aktiviert, so wird ein Rerouting-Prozess eingeleitet, um der Alternativroute 07 zu folgen. Dabei kann es sinnvoll sein, unabhängig von der Art der Eingabe, die das Rerouting ausgelöst hat, in den gemischten Interaktionsmodus zu wechseln und die Neuberechnung der Route akustisch und optisch auszugeben.

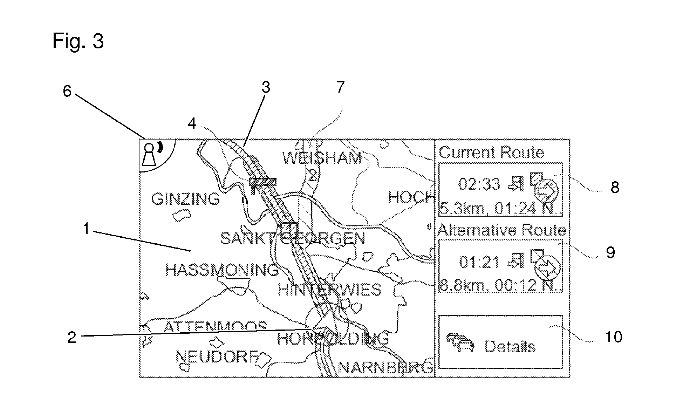

Fig. 3 zeigt die Anzeige einer Anzeigeeinrichtung eines Navigationssystems, die aufgebaut und ausgegeben wird, wenn in der in Fig. 1 beschriebenen Situation die akustische Eingabe eines Bedienerbefehls erfolgt. In der Karte 01 ist das Symbol 02 für die aktuelle Position des Fahrzeugs, die aktuelle Route 03, die Verkehrsstörung 04 und die Umgehungsroute 07 dargestellt. Die Bedienfelder 08 und 09, die Informationen zur aktuellen Route 03 und der alternativen Route 07 enthalten, werden ebenfalls angezeigt. Auch das Bedienfeld 10, mit dem der Benutzer Details zur aktuellen Verkehrslage abrufen kann, wird dargestellt.

Da eine akustische Eingabe vorangegangen ist, wird der akustische Interaktionsmodus oder der gemischte Interaktionsmodus aktiviert. Dadurch werden die auf den Bedienfeldern 08 und 09 enthaltenen Informationen über die aktuelle Route 03 und die Alternativroute 07 auch akustisch ausgegeben. Die Ausgabe kann dabei wie folgt lauten: "Eine mögliche Alternativroute ist 3 km länger als die aktive Route, die voraussichtliche Ankunftszeit ist jedoch eine Minute früher als bei der aktuellen Route. Möchten Sie die alternative Route verfolgen?"

Da sich das Navigationssystem aktuell im akustischen Interaktionsmodus oder gemischten Interaktionsmodus befindet, wird dem Benutzer durch das Signal 06 angezeigt, dass eine akustische Eingabe von Bedienerbefehlen erfolgen kann. Wie schon erwähnt, kann auch hier die Möglichkeit einer akustischen Eingabe von Bedienerbefehlen durch eine akustische Ausgabe signalisiert werden.

Im akustischen Interaktionsmodus können beispielsweise die beiden Sprachkommandos "Ja" und "O.K." zur Bestätigung des Wechsels auf die Alternativroute 07 hinterlegt sein. Wird eines der Sprachkommandos vom Spracherkennungsmodul identifiziert, wird ein Rerouting zum Verfolgen der Alternativroute 07 ausgelöst. Zur Bestätigung der Eingabe wird unabhängig von der Art der Eingabe die Meldung: "Die Route wird neu berechnet.", sowohl graphisch auf der graphischen Ausgabeeinrichtung als auch akustisch mittels der akustischen Ausgabeeinrichtung ausgegeben.

Im gemischten Interaktionsmodus hat der Bediener neben einer akustischen Eingabe auch die Möglichkeit über die Bedienelemente 08, 09 und 10 eine manuelle Eingabe vorzunehmen.

## Patentansprüche

1. Verfahren zum Betrieb eines Navigationssystems umfassend:
- zumindest eine manuelle Eingabeeinrichtung, an der Bedienerbefehle manuell eingegeben werden können,
- zumindest eine optische Ausgabeeinrichtung, mit der graphische Elemente dargestellt werden können,
- eine Sprachsteuerungseinrichtung zur akustischen Eingabe von Bedienerbefehlen, wobei die akustischen Bedienerbefehle von einer akustischen Aufnahmeeinrichtung aufgenommen und von einem Spracherkennungsmodul identifiziert werden,
- zumindest eine akustische Ausgabeeinrichtung zur Ausgabe von akustischen, insbesondere gesprochenen, Inhalten,
**dadurch gekennzeichnet,**
**dass** für die manuelle Eingabeeinrichtung und die Sprachsteuerungseinrichtung ein Paralleleingabemodus aktiviert wird, wobei im Paralleleingabemodus sowohl manuelle Eingaben von Bedienerbefehlen an der manuellen Eingabeeinrichtung als auch akustische Eingaben von Bedienerbefehlen an der Sprachsteuerungseinrichtung entgegengenommen und weiterverarbeitet werden.

2. Verfahren nach Anspruch 1,
**dadurch gekennzeichnet,**
**dass** der Paralleleingabemodus aktiviert wird, wenn
a) ein Navigationsziel eingegeben wird, und/oder
b) eine Verkehrsmitteilung bearbeitet wird, und/oder
c) ein routenspezifisches Zwischenziel ausgewählt wird, und/oder
d) eine Karte angezeigt wird.

3. Verfahren nach Anspruch 1 oder 2,
**dadurch gekennzeichnet,**
**dass** die Aktivierung des Paralleleingabemodus durch eine optische und/oder akustische Ausgabe signalisiert wird.

4. Verfahren nach einem der Ansprüche 1 bis 3,
**dadurch gekennzeichnet,**
**dass** das Navigationssystem zwischen
a) einem akustischen Interaktionmodus, bei dem Eingaben akustisch eingegeben und Ausgaben akustisch ausgegeben werden und/oder
b) einem manuellen Interaktionmodus, bei dem Eingaben manuell eingegeben und Ausgaben optisch ausgegeben werden und/oder
c) einem gemischten Interaktionmodus, bei dem Eingaben akustisch und manuell eingegeben und Ausgaben akustisch und optisch ausgegeben werden,
umgeschaltet werden kann.

5. Verfahren nach einem der Ansprüche 1 bis 4,
**dadurch gekennzeichnet,**
**dass** im Paralleleingabemodus nach Detektion einer manuellen Eingabe ausschließlich der manuelle Interaktionmodus aktiviert wird.

6. Verfahren nach einem der Ansprüche 1 bis 4,
**dadurch gekennzeichnet,**
**dass** im Paralleleingabemodus nach Detektion einer akustischen Eingabe ausschließlich der akustische Interaktionmodus aktiviert wird.

7. Verfahren nach einem der Ansprüche 1 bis 4,
**dadurch gekennzeichnet,**
**dass** im Paralleleingabemodus nach Detektion einer akustischen oder manuellen Eingabe ausschließlich der gemischte Interaktionmodus aktiviert wird.

8. Verfahren nach einem der Ansprüche 1 bis 4,
**dadurch gekennzeichnet,**
**dass** im Paralleleingabemodus nach Detektion einer akustischen oder manuellen Eingabe der aktuelle Interaktionmodus überprüft und abhängig von der Art der Eingabe umgeschaltet wird.

9. Verfahren nach einem der Ansprüche 1 bis 8,
**dadurch gekennzeichnet,**
**dass** bei Ausgaben, die unabhängig von der aktuellen Benutzeraktion ausgegeben werden, insbesondere bei der Ausgabe von Manöveranweisungen, in einen geänderten Interaktionsmodus umgeschaltet wird.

10. Verfahren nach einem der Ansprüche 1 bis 9,
**dadurch gekennzeichnet,**
**dass** der aktuell aktivierte Interaktionsmodus detektiert wird, wobei abhängig vom aktuell aktivierten Interaktionsmodus ein zugeordneter Eingabe-Workflow aus unterschiedlichen Eingabe-Workflows ausgewählt und für die Benutzerführung durch die Eingabemenüs benutzt wird.

11. Verfahren nach einem der Ansprüche 4 bis 10
**dadurch gekennzeichnet,**
**dass** im akustischen und/oder im gemischten Interaktionmodus für die akustische Eingabe eines Bedienbefehls zumindest zwei alternativ mögliche Sprachkommandos gespeichert sind, wobei bei Detektion der Eingabe eines der gespeicherten Sprachkommandos der zugeordnete Bedienbefehl abgearbeitet wird.

12. Verfahren nach einem der Ansprüche 1 bis 11,
**dadurch gekennzeichnet,**
**dass** beim Betrieb des Navigationssystems in einem Fahrzeug die akustische Ausgabe- und/oder Aufnahmeeinrichtung des im Fahrzeug befindlichen Audiosystems verwendet wird.

13. Verfahren nach einem der Ansprüche 1 bis 12,
**dadurch gekennzeichnet,**
**dass** als Aufnahmevorrichtung der akustischen Bedienerbefehle ein unidirektionales Stereomikrophon verwendet wird.
